# EUROPEAN PATENT APPLICATION

(11) **EP 3 170 567 A1**
(43) Date of publication of application: **24.05.2017**
(21) Application number: 16199296.1
(22) Date of filing: 17.11.2016
(51) Int. Cl.: B05D 3/06, H05K 9/00, H01J 65/04

(54) **UV LIGHT SOURCES, AND GASKETS FOR UV LIGHT SOURCES**

(30) Priority: 23.11.2015 US 201562258815 P
(71) Applicant: Heraeus Noblelight America LLC, Gaithersburg, MD 20878 (US)
(72) Inventor: Leonhardt, Darrin, Gaithersburg, MD 20878 (US); Wood, Charles H., Rockville, MD 20853 (US); Sprankle, David A., Hagerstown, MD 21742 (US)
(74) Representative: Staudt, Armin Walter

(57) **Abstract**

A gasket (100a; 100b; 100c; 100d; 200a; 200b; 300a; 300b; 300c) for use in an ultraviolet light source (202; 302) is provided. The gasket includes a body portion formed of an elastomeric material. The body portion is electrically conductive.

## Description

### FIELD

The invention relates to flexible gaskets for ultraviolet (UV) light sources, and more particularly, to UV light sources including flexible elastomeric gaskets between elements of the UV light sources.

### BACKGROUND

Ultraviolet (UV) light sources (such as UV curing lamp assemblies) utilize gaskets between elements. Typically, such gaskets are metal (e.g., stainless steel) braided gaskets used between elements. Such gaskets suffer from a number of limitations. For example, such metal braided gaskets tend to be difficult to insert into elements and tend to permanently deform during use. Further, such metal braided gaskets may be misaligned, causing localized electrical continuity "breaks" resulting in arcing between elements (e.g., between a reflector and a waveguide) during operation. Significant damage to such elements may be sustained. Even with proper gasket alignment, in metal braided gaskets corrosion tends to build up within voids over long periods of operation. This may cause reduced electrical conductivity and may increase the probability of arcing between elements (e.g., between a waveguide and a reflector).

Further still, "micro-arcing" tends to be common with metal braided gaskets. The fine, sharp edges of the individual wire strands of the braided gasket may cause extremely high electric field lines during a lamp ignition phase (especially before microwave energy is well absorbed by plasma in the bulb of the assembly), resulting in small localized arcing. Over many lamp ignition cycles, such micro-arcing may evolve from a minor nuisance to a significant failure mechanism, as the resistance between the elements (e.g., the reflector and the waveguide) continues to build up due to oxidation from previous micro-arcing events.

Thus, aspects of the invention are aimed at overcoming certain deficiencies of conventional metal braided gaskets and associated ultraviolet light sources.

### SUMMARY

According to an exemplary embodiment of the invention, a gasket for use in an ultraviolet light source is provided. The gasket includes a body portion formed of an elastomeric material. The body portion is electrically conductive.

According to another exemplary embodiment of the invention, an ultraviolet light source is provided. The ultraviolet light source includes: (i) a reflector assembly including at least one reflector element; (ii) a waveguide for directing microwave energy to the reflector assembly; and (iii) a gasket between the waveguide and at least one reflector element of the reflector assembly. The gasket is formed of an elastomeric material. The gasket is electrically conductive.

According to yet another exemplary embodiment of the invention, an ultraviolet light source is provided. The ultraviolet light source includes: (i) a reflector assembly including a plurality of reflector elements; (ii) a waveguide for directing microwave energy to the reflector assembly; and (iii) a plurality of gaskets, each of the gaskets being positioned between the waveguide and at least one of the reflector elements. Each of the gaskets is formed of an elastomeric material, and each of the gaskets is electrically conductive and includes a plurality of electrically conductive particles throughout the gasket.

### BRIEF DESCRIPTION OF THE DRAWINGS

The invention is best understood from the following detailed description when read in connection with the accompanying drawings. It is emphasized that, according to common practice, the various features of the drawings are not to scale. On the contrary, the dimensions of the various features are arbitrarily expanded or reduced for clarity. Included in the drawings are the following figures:

FIGS. 1A-1D are perspective views of gaskets according to various exemplary embodiments of the invention;
FIG. 1E is a detailed view of a portion of FIG. 1A;
FIG. 2A is an exploded perspective view of an ultraviolet light source according to an exemplary embodiment of the invention;
FIG. 2B is a front sectional view of the ultraviolet light source of FIG. 2A;
FIGS. 2C and 2D are detailed views of respective portions of FIG. 2B;
FIG. 3A is an exploded perspective view of an ultraviolet light source according to another exemplary embodiment of the invention;
FIG. 3B is a front sectional view of the ultraviolet light source of FIG. 3A;
FIG. 3C is a side sectional view of the ultraviolet light source of FIG. 3A;
FIG. 3D is a detailed view of a portion of FIG. 3B; and
FIG. 3E is a detailed view of a portion of FIG. 3C.

### DETAILED DESCRIPTION

Exemplary embodiments of the invention relate to a flexible, reusable, electrically conductive elastomeric gasket for use in ultraviolet (UV) light sources (e.g., UV curing lamp assemblies). Such gaskets may be used, for example, in UV light sources (e.g., microwave lamps) marketed by Heraeus Noblelight America LLC of Gaithersburg, Maryland, USA. For example, see U.S. Patent No. 8,251,526 illustrating aspects of exemplary UV light sources.

Gaskets according to the invention may have varying dimensions. A very specific, and non-limiting gasket having a rectangular cross section has a thickness of between 0.01 inches to 0.02 inches. In varying ultraviolet light sources, different numbers of inventive gaskets may be utilized, as needed.

Flexible, reusable, elastomeric gaskets according to the invention may be formed, for example, of a silicone-based material impregnated with conductive particles (e.g., metal fibers, graphite fibers, nickel fibers, nickel coated graphite fibers/particles, among many others). Thus, an electrically conductive gasket may be provided that is flexible (e.g., permanently or substanially permanently flexible, such that the gasket is reuseable). Such gaskets may be repeatedly compressed between elements (e.g., a microwave lamp waveguide and a reflector assembly) without loss of electrical conductivity. This is important because certain elements of an ultraviolet light source (e.g., the reflector elements) may be consumable elements. However, the inventive gaskets may be re-used, even after replacement of associated consumable elements.

Exemplary gasket materials that may be utilized in connection with the invention may be obtained from, for example: (i) Schlegel Electronic Materials (http://www.schlegelsemi.com); and (ii) LeaderTech (http://www.leadertechinc.com).

Gaskets according to the invention may be designed to be engaged in grooves, apertures, cavities, etc. of certain elements (e.g., such as walls of the waveguide, as illustrated and described herein). In other examples, the gaskets may be self adhesive (e.g., include an adhesive to temporarily be engaged with a structure, as desired).

Exemplary gaskets have been illustrated and described herein. Certain of the gaskets (e.g., gaskets having a "T" shaped cross section, gaskets having an "L" shaped cross section, etc.) may be utilized to address certain systems where grooves (or other apertures or cavities) are defined by the waveguide or other elements of the ultraviolet light source. Certain of the gaskets (e.g., gaskets having a rectangular cross section) may be utilized in other applications. Nonetheless, the exact shape of the elongated gasket may depend on the specific application. The invention is not limited to any specific shape or configuration.

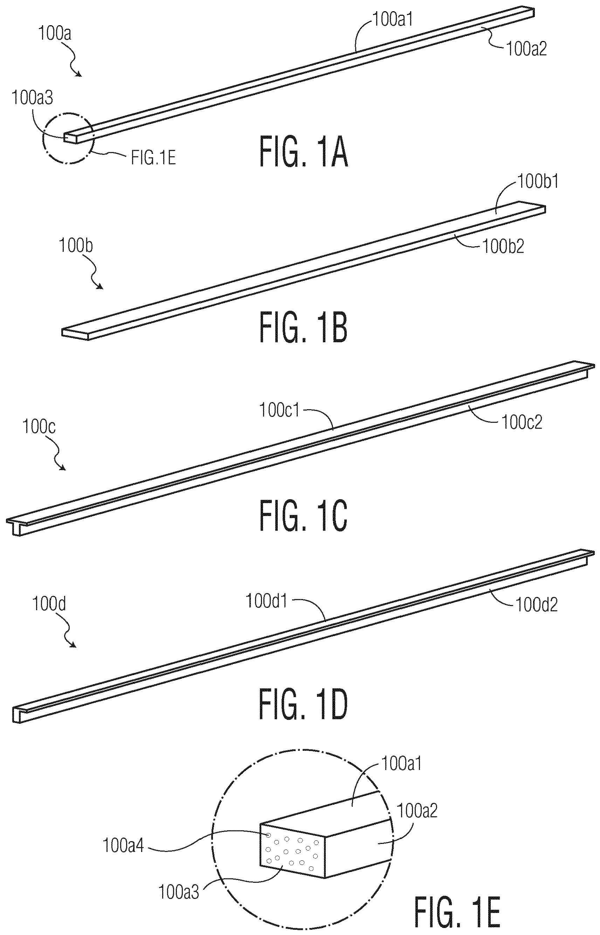

FIG. 1A illustrates a gasket 100a having an elongate shape, extending along a longitudinal axis when in the non-deformed state shown in FIG. 1A. Gasket 100a is defined by a body portion illustrated in FIG. 1A, and includes side walls 100a1 and 100a2. Sidewalls 100a1, 100a2 (and the other sidewalls, not labelled in FIG. 1A) define a rectangular cross section 100a3 shown in detail FIG. 1E. Gasket 100a is flexible, and is desirably formed of an elastomeric material. Further, gasket 100a is desirably electrically conductive, and includes electrically conductive particles 100a4 (see FIG. 1E) distributed throughout the body portion. While the particles 100a4 appear to have a substantial uniform shape and direction, this is for illustration only. It is understood that the particles may be distributed as desired (e.g., randomly, or otherwise) throughout the gasket. Further, while not shown with respect to the various other gasket illustrations, it is understood that any gasket within the invention may be electrically conductive, and may include electrical particles such as shown in FIG. 1E.

FIG. 1B illustrates another gasket 100b having an elongate shape, extending along a longitudinal axis when in the non-deformed state shown in FIG. 1B. Gasket 100b is defined by a body portion illustrated in FIG. 1B, and includes side walls 100b1 and 100b2. Sidewalls 100b1, 100b2 (and the other sidewalls, not labelled in FIG. 1B) define a rectangular cross section 100a3 shown in detail FIG. 1E. Gasket 100a is flexible, and is desirably formed of an elastomeric material, and is desirably electrically conductive.

FIG. 1C illustrates another gasket 100c having an elongate shape, extending along a longitudinal axis when in the non-deformed state shown in FIG. 1C. Gasket 100c is defined by a body portion illustrated in FIG. 1C, and includes first elongate portion 100c1 and second elongate portion 100c2. First elongate portion 100c1 and second elongate portion 100c2 may be formed from a unitary piece of material. In another example, first elongate portion 100c1 and second elongate portion 100c2 may be secured together to form the "T" shape shown in FIG. 1C. That is, gasket 100c has a "T" shaped cross section. Gasket 100c is flexible, and is desirably formed of an elastomeric material, and is desirably electrically conductive.

FIG. 1D illustrates another gasket 100d having an elongate shape, extending along a longitudinal axis when in the non-deformed state shown in FIG. 1D. Gasket 100d is defined by a body portion illustrated in FIG. 1D, and includes first elongate portion 100d1 and second elongate portion 100d2. First elongate portion 100d1 and second elongate portion 100d2 may be formed from a unitary piece of material. In another example, first elongate portion 100d1 and second elongate portion 100d2 may be secured together to form the "L" shape shown in FIG. 1D. That is, gasket 100d has an "L" shaped cross section. Gasket 100d is flexible, and is desirably formed of an elastomeric material, and is desirably electrically conductive.

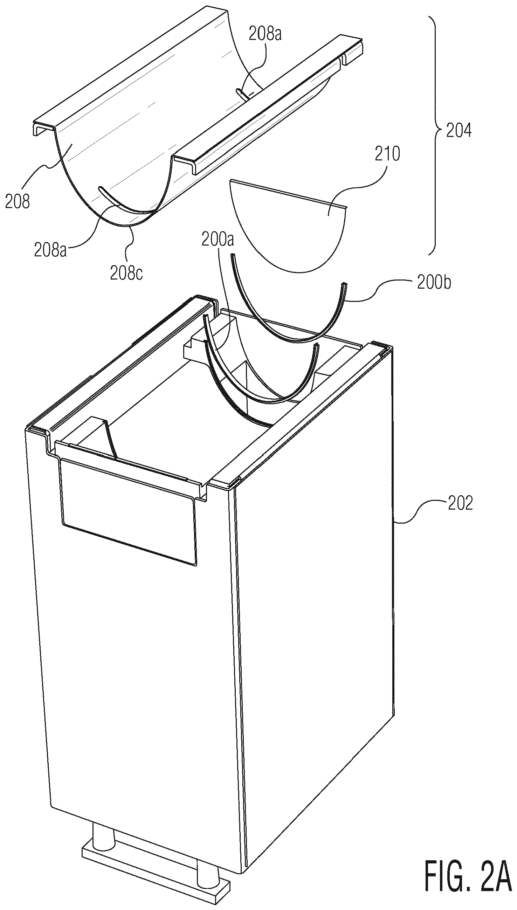

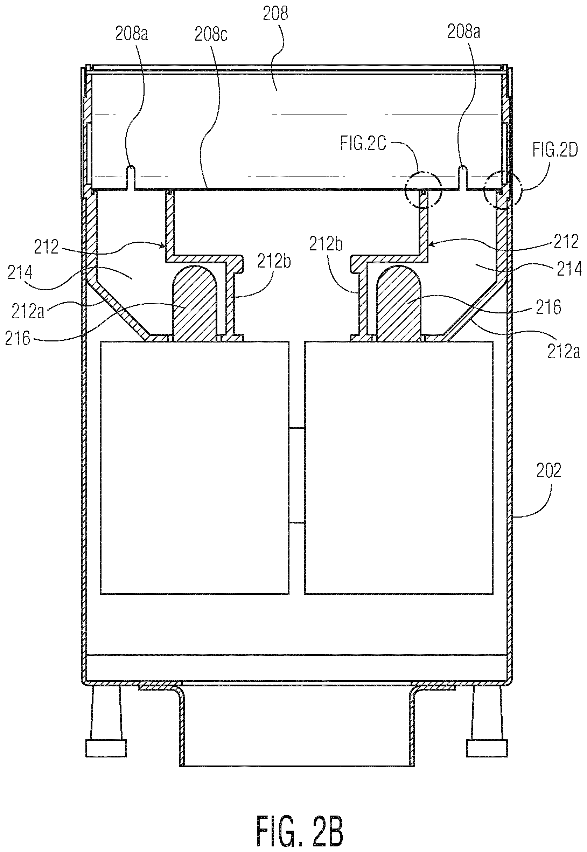

FIG. 2A is an exploded perspective view of an ultraviolet light source 202, and FIG. 2B is a front sectional view of ultraviolet light source 202. Ultraviolet light source 202 includes microwave sources 216 (e.g., magnetrons) for providing microwave energy to a pair of waveguides 212. Each waveguide 212 includes walls 212a, 212b that help to define a respective waveguide cavity 214. Microwave energy from a respective microwave source 216 is directed from a respective waveguide 212 to reflector assembly 204. That is, main reflector element 208 defines apertures 208a (e.g., slots). Microwave energy enters reflector assembly 204 through apertures 208a, and interacts with a bulb (not shown for simplicity). The absorption of microwave energy by the bulb(s) results in the generation of plasma energy useful for curing, drying, and other applications of ultraviolet light source 202.

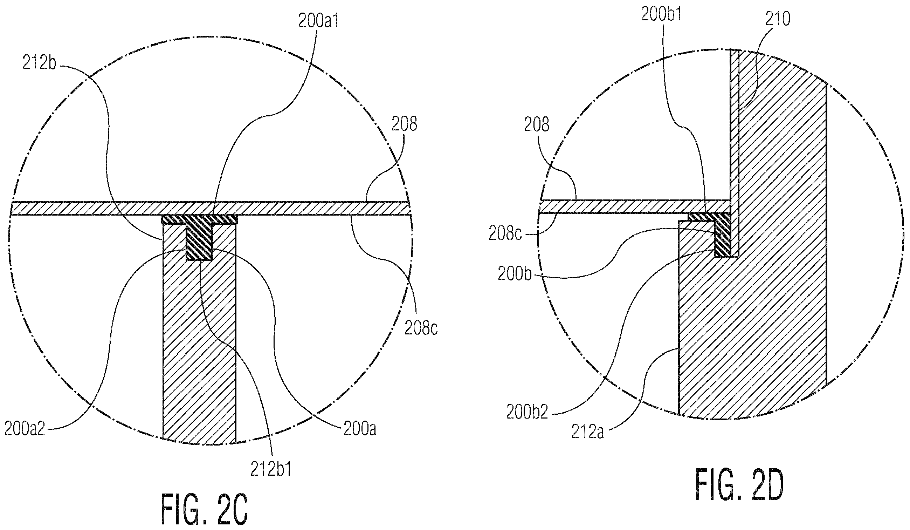

FIG. 2A illustrates reflector assembly 204 in an exploded view, where reflector assembly 204 includes main reflector element 208 and end reflector 210. It will be understood that additional reflector elements (not shown) may be included in reflector assembly 204 including but not limited to another end reflector 210. FIG. 2A also ilustrates two exemplary gaskets 200a, 200b (bent/shaped as desired for installation) used during assembly of ultraviolet light source 202. Specifically, FIGS. 2C-2D illustrate installation of gaskets 200a, 200b.

Gasket 200a is a "T" shaped gasket (substantially similar to gasket 100c illustrated in FIG. 1C). Gasket 200a includes a first elongate portion 200a1 and a second elongate portion 200a2. Gasket 200a is positioned between waveguide 212 and a portion of reflector assembly 204. More specifically, as shown in FIG. 2C, elongate portion 200a2 of gasket 200a is fit into groove 212b1 defined by interior wall 212b of waveguide 212. Further, as shown in FIG. 2C, lower surface 208c of main reflector element 208 is in contact with upper elongate portion 200a1 of gasket 200a.

Gasket 200b is an "L" shaped gasket (substantially similar to gasket 100d illustrated in FIG. 1D). Gasket 200b includes a first elongate portion 200b1 and a second elongate portion 200b2. Gasket 200b is positioned between waveguide 212 and a portion of reflector assembly 204. More specifically, as shown in FIG. 2D, each of elongate portions 200b1 and 200b2 of gasket 200b fit against a stepped portion defined by outer wall 212a of waveguide 212. Further, as shown in FIG. 2D, lower surface 208c of main reflector element 208 is in contact with upper elongate portion 200b1 of gasket 200b.

Of course, additional gaskets according to the invention may be provided between reflector assembly 204 and waveguide 212, or between different elements of ultraviolet light source 202.

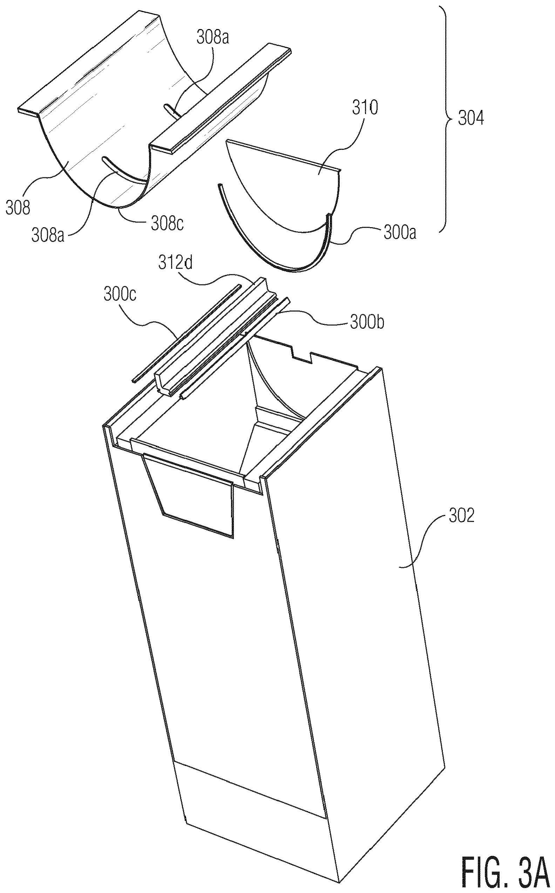

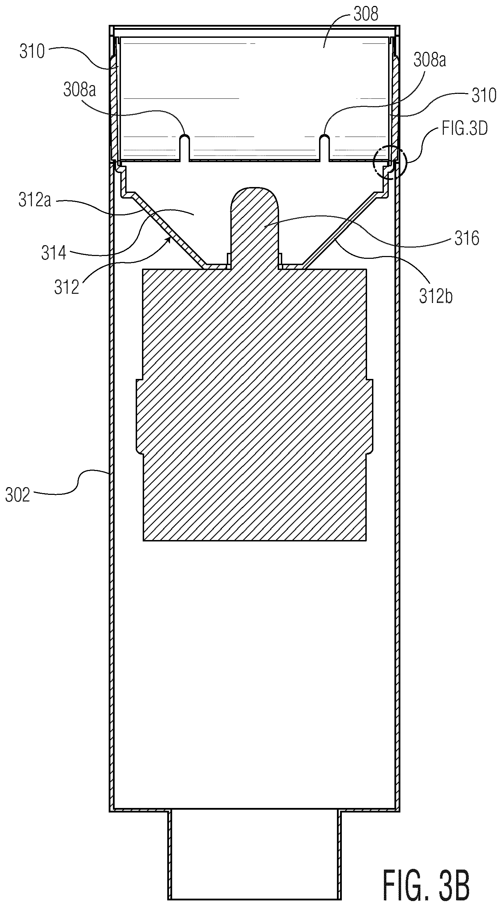

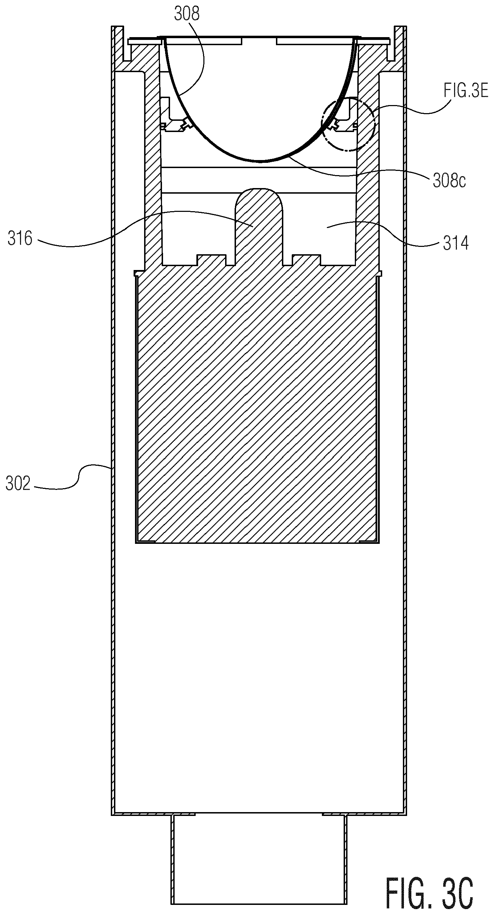

FIG. 3A is an exploded perspective view of an ultraviolet light source 302, FIG. 3B is a front sectional view of ultraviolet light source 302, and FIG. 3C is a side sectional view of ultraviolet light source 302. Ultraviolet light source 302 includes a microwave source 316 (e.g., a magnetron) for providing microwave energy to a waveguide 312. Waveguide 312 includes walls 312a, 312b that help to define a waveguide cavity 314. Microwave energy from microwave source 316 is directed from waveguide 312 to reflector assembly 304. That is, main reflector element 308 defines apertures 308a (e.g., slots). Microwave energy enters reflector assembly 304 through apertures 308a, and interacts with a bulb (not shown for simplicty). The absorption of microwave energy by the bulb(s) results in the generation of plasma energy useful for curing, drying, and other applications of ultraviolet light source 302.

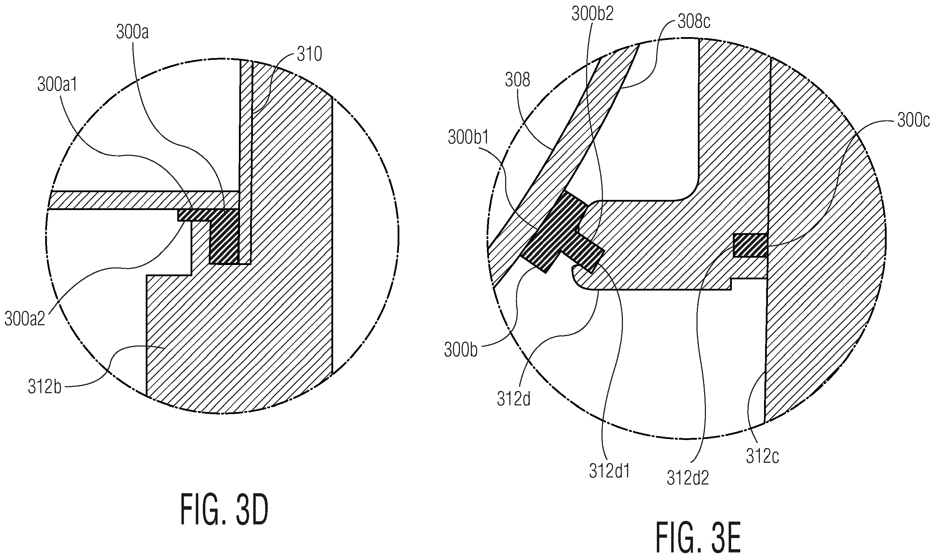

FIG. 3A illustrates reflector assembly 304 in an exploded view, where reflector assembly 304 includes main reflector element 308 and end reflector 310. It will be understood that additional reflector elements (not shown) may be included in reflector assembly 304 including but not limited to another end reflector 310 (see FIG. 3B). FIG. 3A also ilustrates exemplary gaskets 300a, 300b, and 300c used during assembly of ultraviolet light source 302. Specifically, FIGS. 3D-3E illustrate installation of gaskets 300a, 300b, and 300c.

Gasket 300a is an "L" shaped gasket (substantially similar to gasket 100d illustrated in FIG. 1D). Gasket 300a includes a first elongate portion 300a1 and a second elongate portion 300a2. Gasket 300a is positioned between waveguide 312 and a portion of reflector assembly 304. More specifically, as shown in FIG. 3D, each of elongate portions 300a1 and 300a2 of gasket 300a fit against a stepped portion defined by wall 312b of waveguide 312. Further, as shown in FIG. 3D, lower surface 308c of main reflector element 308 is in contact with upper elongate portion 300a1 of gasket 300a.

Gasket 300b is a "T" shaped gasket (substantially similar to gasket 100c illustrated in FIG. 1C). Gasket 300b includes a first elongate portion 300b1 and a second elongate portion 300b2. Gasket 300b is positioned between waveguide 312 and a portion of reflector assembly 304. More specifically, as shown in FIG. 3E, elongate portion 300b2 of gasket 300b is fit into groove 312d1 of siderail 312d of waveguide 312. Further, as shown in FIG. 3E, lower surface 308c of main reflector element 308 is in contact with upper elongate portion 300b1 of gasket 300b.

Gaskets according to the invention may also be provided for areas of engagement that are between other elements. That is, the invention has largely been described in connection with gaskets between (i) portions of a waveguide and (ii) portions of a reflector assembly. However, the invention is not limited thereto. For example, FIG. 3E illustrates a gasket 300c having a rectangular cross section (substantially similar to gasket 100a in FIG. 1A). Gasket 300c is positioned between siderail 312d of waveguide 312 and wall 312c of waveguide 312. More specifically, gasket 300c is fit into groove 312d2 defined by siderail 312d, and on the right side, gasket 300c is in contact with wall 312c of waveguide 312.

As will be appreciated by those skilled in the art, after assembly of relevant elements of an ultraviolet light source according to the invention (e.g., elements of a reflector assembly), the inventive gaskets may deform, as they are flexible and formed of an elastomeric material. Such assembly may involve tightening of fasteners (e.g., screws, bolts, etc.). Under such deformation or compression, the gaskets desirably maintain their electrical conductivity.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A gasket (100a; 100b; 100c; 100d; 200a; 200b; 300a; 300b; 300c) for use in an ultraviolet light source (202; 302), the gasket comprising:
a body portion **characterized in that** the body portion is formed of an elastomeric material, the body portion being electrically conductive.

2. The gasket of claim 1 wherein the gasket has an elongate shape, and the gasket has a rectangular cross section (100a3).

3. The gasket of claim 1 wherein the gasket has an elongate shape, and has a "T" shaped or an "L" shaped cross section.

4. The gasket according to any of claims 1-3 wherein the elastomeric material is silicone-based.

5. The gasket according to any of claims 1-4 wherein the body portion includes electrically conductive particles (100a4) throughout the body portion.

6. The gasket of claim 5 wherein the electrically conductive particles includes at least one of graphite particles and nickel particles.

7. The gasket according to any of claims 1-6 wherein the body portion includes a first elongate member and a second elongate member secured together.

8. The gasket according to any of claims 1-7 wherein the gasket is flexible.

9. An ultraviolet light source (202, 302) comprising:
a reflector assembly (204, 304) including at least one reflector element (208, 210, 308, 310); and
a waveguide (212, 312) for directing microwave energy to the reflector assembly; and
a gasket (200a; 200b; 300a; 300b; 300c) between the waveguide and at least one reflector element of the reflector assembly, **characterized in that** the gasket is formed of an elastomeric material, the gasket being electrically conductive.

10. The ultraviolet light source of claim 9 wherein the gasket has an elongate shape, and the gasket has a rectangular cross section (100a3).

11. The ultraviolet light source of claim 9 wherein the gasket has an elongate shape, and has a "T" shaped or an "L" shaped cross section.

12. The ultraviolet light source according to any of claims 9-11 wherein the elastomeric material is silicone-based.

13. The ultraviolet light source according to any of claims 9-12 wherein the body portion includes electrically conductive particles (100a4) throughout the body portion.

14. The ultraviolet light source of claim 13 wherein the electrically conductive particles includes at least one of graphite particles and nickel particles.

15. The ultraviolet light source according to any of claims 9-14 wherein the body portion includes a first elongate member and a second elongate member secured together.
